# EUROPÄISCHE PATENTSCHRIFT

(11) **EP 0 419 731 B1**
(45) Veröffentlichungstag und Bekanntmachung des Hinweises auf die Patenterteilung: **12.01.1994**
(21) Anmeldenummer: 89118146.3
(22) Anmeldetag: 29.09.1989
(51) Int. Cl.: G09F 3/00

(54) **Farblich kodierter Einmalfilterhalter**
Disposable filter coded by colourisation
Filtre à jeter codé par colorisation

(43) Veröffentlichungstag der Anmeldung: 03.04.1991
(73) Patentinhaber: Schleicher & Schuell GmbH, D-37574 Einbeck (DE)
(72) Erfinder: Bugar, Robert, D-3352 Einbeck 15 (DE); Chakraborty, Asok, Dr., D-3400 Göttingen (DE); Urlaub, Herbert, Dr., D-3352 Einbeck 1 (DE)
(74) Vertreter: Jaeger, Klaus, Dr.

(56) Entgegenhaltungen:
- EP-A- 0 202 884
- DE-A- 2 837 058
- US-A- 4 713 900

## Beschreibung

Die Erfindung betrifft einen farblich kodierten Einmalfilterhalter der im Anspruch 1 beschriebenen Gattung.

Der erfindungsgemäße Einmalfilterhalter kann insbesondere für die Druckfiltration Anwendung finden. Die Begriffe "Filter" und "Druckfiltration" schließen im Rahmen der vorliegenden Unterlagen auch ähnliche Verfahren, wie beispielsweise die Ultrafiltration, die umgekehrte Osmose und die einfache Schwerkraftfiltration mit ein.

Gattungsgemäße Einmalfilterhalter besitzen üblicherweise ein zweiteiliges Gehäuse aus Kunststoff, dessen beide Gehäusehälften druckdicht miteinander verbunden sind, und sind flach und dosenförmig ausgebildet. Derartige Einmalfilterhalter weisen innen einen im wesentlichen flachen Hohlraum auf, der durch ein Filter, beispielsweise ein Membranfilter, in einen zulaufseitigen Druckraum und einen ablaufseitigen Filtratraum unterteillt sind. Das Filter ist dabei gebräuchlicherweise durch eine im unteren Gehäuse ausgebildete Filterunterstützung gegen ein Einreißen gesichert.

Derartige Einmalfilterhalter werden gewöhnlich dort eingesetzt, wo es darum geht, insbesondere kleine und kleinste Fluidvolumina rasch, zuverlässig und bedarfsweise steril zu filtern. Sie finden insbesondere auf dem Gebiet der allgemeinen Laboratoriumstechnik, beispielsweise zur Herstellung hochreiner Reaktionslösungen, Anwendung. Ein weiterer wesentlicher Anwendungsbereich ist die medizinische und pharmazeutische Laboratoriumstechnik.

Die Vielfalt dieser Anwendungen erfordert Einmalfilterhalter, die sich bei gleichen äußeren Abmessungen des Gehäuses und des Filters lediglich durch die Filterkennwerte, beispielsweise das Filtermaterial bzw. dessen Porengröße und Sterilitätszustand, unterscheiden. Da derartige Einmalfilterhalter Massenprodukte sind, müssen diese auf einfache und zuverlässige Weise sowie unterscheidungskräftig gekennzeichnet werden. Diese Unterscheidung kann beispielsweise durch eine individualisierende Kennzeichnung eines oder beider Gehäuseteile, beispielsweise durch Einfärben des Gehäusematerials oder durch Aufbringen einer kennzeichnenden Prägung, erfolgen. Nachteilig bei diesen bekannten, derartig gekennzeichneten Einmalfilterhaltern ist die Tatsache, daß bei einem Produktionswechsel der Typenserie entweder das Formwerkzeug gewechselt oder die komplette Spritzgießmaschine, einschließlich Extruder, bedingt durch die Umstellung auf eine andere Farbe, gereinigt werden muß.

Aus der deutschen Patentschrift DE-C-28 37 058 ist es bekannt, Einmalfilterhalter verschiedener Typenserien mit gleichem Gehäuse herzustellen. Dazu werden die Gehäusehälften, die für alle Typenserien einer Größenklasse identisch sind, unter Einlegen eines Filters form- oder kraftschlüssig zusammengefügt und anschließend in einem Verschlußformwerkzeug mit einem entsprechend den Kenndaten des Filters eingefärbten Verschlußring aus Kunststoff gas- und druckdicht umspritzt.

Nachteilig bei diesem bekannten Einmalfilterhalter ist jedoch, daß der farbige Verschlußring einerseits Dicht- und Verschlußaufgaben und andererseits Markierungsaufgaben gleichzeitig erfüllen muß. Hinzu kommt, daß dieser Verschlußring sowohl das Gehäuseoberteil als auch das Gehäuseunterteil umgreifend ausgeführt sein muß. Zudem kann die Umspritzung mit dem farbigen Ring erst dann erfolgen, wenn das Gehäuseoberteil und das Gehäuseunterteil zusammengesetzt sind. Diese Umspritzung muß also an dem zusammengesetzten Einmalfilterhalter erfolgen.

Ausgehend von diesem Stand der Technik ist es daher die Aufgabe der vorliegenden Erfindung, einen gattungsgemäßen Einmalfilterhalter bereitzustellen, der preiswert herzustellen ist, bei dem die Dicht- und Verschlußfunktion getrennt sind und der zuverlässig sowie beständig farblich gekennzeichnet ist.

Diese Aufgabe wird durch einen Einmalfilterhalter gemäß der Lehre des Patentanspruchs 1 gelöst.

Der erfindungsgemäße, farblich kodierte Einmalfilterhalter zeichnet sich somit unter anderem dadurch aus, daß eine Farbmarkierung aus einem vorgefertigten Kunststoffring bzw. Kunststoffclip besteht. Dieser Kunststoffring ist in eine im radial äußeren Bereich des Einmalfilters umlaufende Ringnut eingesetzt und besteht aus einem farbigen Kunststoff. Auch der Einmalfilterhalter selbst besteht aus Kunststoff und ist aus einem ersten scheibenartig (insbesondere kreisscheibenartig) geformten und mit einem Zulaufstutzen versehenen Gehäuseteil und aus einem zweiten, ebenfalls scheibenartig (insbesondere kreisscheibenartig) und mit einem Ablaufstutzen versehenen Gehäuseteil aufgebaut. Die beiden Gehäuseteile sind an ihrem radial äußeren, zueinander weisenden Bereich unter Zwischenlage eines scheibenförmigen Filters druckbelastbar dicht sowie fest miteinander verbunden. Die Verbindung der beiden Gehäuseteile erfolgt im Bereich zweier, im wesentlichen ringförmiger Axialflächen an den zueinander weisenden Stirnflächen der Gehäuseteile und kann eine kraftschlüssige oder formschlüssige Verbindung sein. Diese Verbindung kann beispielsweise durch Verkleben erfolgen. Vorzugsweise erfolgt sie jedoch in an sich bekannter Weise durch Ultraschallschweißen, wodurch sich eine gute Automatisierbarkeit des Fügeverfahrens bei gleichzeitig niedrigen Fertigungskosten mit befriedigender Dichtigkeit ergibt. So kann beispielsweise das eine Gehäuseteil mit einer ringartig umlaufenden Nut ausgestattet sein, in das eine ringartig umlaufende Feder beim Zusammenbau der beiden Gehäuseteile in Eingriff kommt und durch Ultraschallschweißen miteinander verbunden werden.

Der als Farbmarkierung dienende Kunststoffring ist ein vorgefertigter Kunststoffring und zweckmäßigerweise ein spritzgeformter Kunststoffring aus einem Elastomer. Dieser Kunststoffring kann entweder beim Zusammenfügen oder Gehäuseteile oder auch im Anschluß daran angebracht werden.

Durch die Verwendung eines vorgefertigten Kunststoffringes, der somit vor dem eigentlichen Herstellungsprozeß des Einmalfilterhalters gefertigt wird, erhöhen sich zwar die im Zusammenhang mit der Lagerhaltung zu erbringenden Aufwendungen. Der Kunststoffring ist jedoch ein Teil mit geringen Ausmaßen; Tausende derartiger Kunststoffringe können in einer verhältnismäßig kleinen Verpackung konditioniert und zum Produktionsort gebracht werden.

Als wesentlicher Vorteil des Einsatzes eines vorgefertigten Kunststoffringes ist jedoch die Tatsache anzusehen, daß beim Zusammenfügen der Gehäuseteile kein irgendwie gearteter Spritzvorgang mehr durchgeführt werden muß, um den Kunststoffring selbst herzustellen bzw. am Einmalfilter anzubringen. Es ist somit nicht mehr erforderlich, den bereits zusammengefügten Einmalfilterhalter, der aufgrund der ihm eigenen Formgebung schwierig zu handhaben ist, in eine Spritzmaschine einzuführen und dort in einem separaten Arbeitsgang mit der Farbmarkierung auszustatten.

Der als Farbmarkierung dienende Kunststoffring ist vorzugsweise ein Bandring. Ein derartiger Bandring besitzt einen flachen Ringkörper, dessen größte Ausdehnung sich in axialer Richtung (bezogen auf den Ring) erstreckt.

Dieser Bandring ist auf der äußeren Mantelfläche des Einmalfilterhalters angebracht. Er ist in eine Ringnut eingesetzt, die in der äußeren Mantelfläche des ersten Gehäuseteils und/oder des zweiten Gehäuseteils ausgenommen ist. Zweckmäßigerweise ist jeweils eine Hälfte der Nut auf einem Gehäusteil ausgenommen, so daß beim Zusammenfügen der beiden Gehäuseteile die vollständige Nut entsteht.

Handelt es sich bei dem Kunststoffring um einen oben geschilderten Bandring, dann ist es von Vorteil, diesen Bandring bereits beim Zusammenfügen der beiden Gehäuseteile anzubringen, beispielsweise dadurch, daß man den Kunststoffring auf die vom Stutzen abgewandte, den scheibenartigen Bereich darstellende Seite des ersten Gehäuseteils aufschiebt und im Anschluß daran das zweite Gehäuseteil mit seinem scheibenartigen Bereich in den Kunststoffring einführt und auf den korrespondierenden scheibenartigen Bereich des ersten Gehäuseteils aufsetzt. Im Anschluß daran können die beiden Gehäuseteile beispielsweise durch Ultraschallschweißen miteinander verbunden werden. Der Kunststoffring kann bei diesem Arbeitsgang mit den beiden Gehäuseteilen verschweißt werden. Dies ist jedoch nicht zwingend, so daß auch nur die beiden Gehäuseteile miteinander verbunden werden können, ohne daß der Kunststoffring eine feste Verbindung damit eingeht.

Bei einer weiterhin bevorzugten Ausführungsform ist der Kunststoffring ein Flachring. Die größte Ausdehnung des Ringkörpers selbst erstreckt sich somit ein radialer Richtung. Dieser Flachring ist in eine Ringnut eingesetzt, die im radial äußeren Bereich der axial auswärts gerichteten Stirnfläche mindestens eines der beiden Gehäuseteile verläuft. Natürlich kann man den erfindungsgemäßen Einmalfilterhalter auch auf beiden Gehäuseteilen mit einer derartigen Ringnut ausstatten, so daß dieser Einmalfilter dann mit zwei Flachringen ausgestattet ist.

Sowohl der Bandring als auch der Flachring können in der dazugehörigen Ringnut auf übliche Weise fixiert werden. Vorzugsweise sind die genannten Ringe und die dazugehörige Ringnut derart dimensioniert, daß der Band- bzw. Flachring paßgenau und dauerhaft in die dazugehörige Ringnut einclipsbar ist. Dazu besitzen die Ringnut und der Kunststoffring vorzugsweise einen flächenkongruenten Querschnitt und insbesondere einen Rechteckquerschnitt.

Die beiden Gehäuseteile des erfindunsgemäßen Einmalfilters bestehen vorzugsweise aus zumindest im wesentlichen durchsichtigem Kunststoff und sind, ebenfalls vorzugsweise, durch Spritzgießen hergestellt. Die Farbmarkierung und somit der Kunststoffring bestehen vorzugsweise aus einem im wesentlichen undurchsichtigen eingefärbten Kunststoff.

Die Erfindung ist im folgenden anhand zweier Ausführungsbeispiele in Verbindung mit den Figuren näher erläutert. Von den Figuren zeigen:
- Fig. 1: einen Axialschnitt eines ersten Ausführungsbeispiels eines erfindungsgemäßen Einmalfilterhalters in schematischer Darstellung; und
- Fig. 2: einen teilweise dargestellten Axialschnitt eines zweiten Ausführungsbeispiels eines erfindungsgemäßen Einmalfilterhalters.

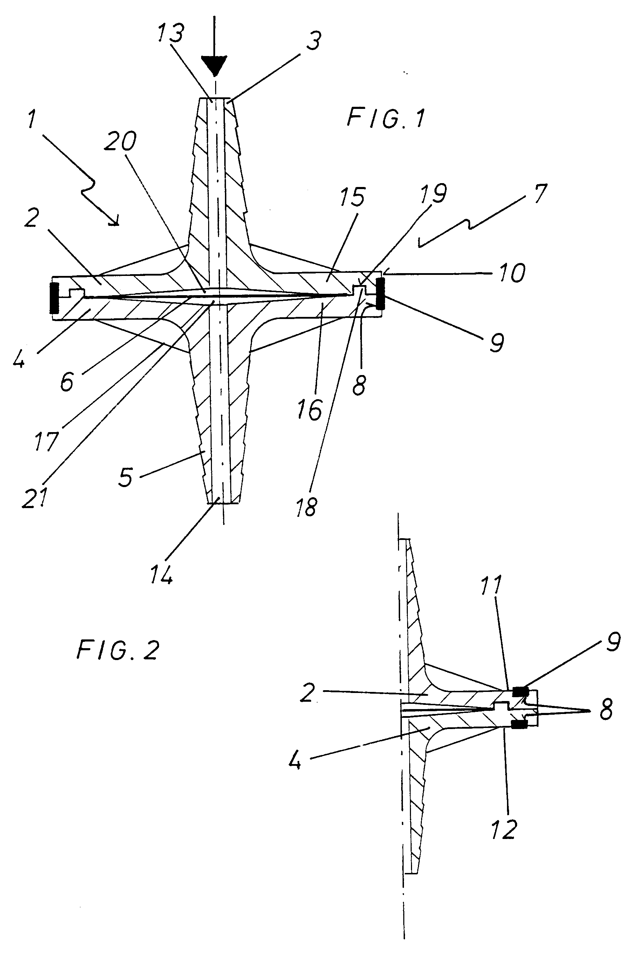

Der in der Fig. 1 gezeigte erfindungsgemäße Einmalfilterhalter 1 besteht aus einem ersten, im wesentlichen scheibenartig geformten Gehäuseteil 2 mit einem Zulaufstutzen 3 und einem zweiten, ebenfalls scheibenartig geformten Gehäuseteil 4 mit einem Ablaufstutzen 5. Zulaufstutzen 3 und Ablaufstutzen 5 sind schlauchtüllenartig geformt und weisen je eine durchgehende Bohrung 13 und 14 auf, die zueinander fluchten.

Die scheibenförmigen Bereiche 15 und 16 der Gehäuseteile 2 und 4 weisen sternförmig angeordnete Stützrippen 17 in Richtung des Zulaufstutzens 3 bzw. des Ablaufstutzens 5 auf, die deren Abbrechen z.B. beim Aufstecken nicht dargestellter Anschlußschläuche verhindern sollen.

Die beiden Gehäuseteile 2 und 4 sind in ihrem radial äußeren, zueinander weisenden Bereich unter Zwischenlage eines scheibenförmigen Filters 6 miteinander verbundene Diese Verbindung kann beliebiger und an sich bekannter Natur sein. Bei der in der Fig. 1 gezeigten Ausführungsform besitzt das Gehäuseteil 4 eine ringförmig umlaufende Feder 18, die von einer ebenfalls umlaufenden Nut 19 aufgenommen ist und damit z.B. durch Ultraschallschweißen gas- und flüssigkeitsdicht sowie druckfest miteinander verbunden ist.

Durch das Filter 6, das beispielsweise ein Membranfilter sein kann, wird der Einmalfilterhalter 1 in eine Druckkammer 20 und eine Filtratkammer 21 unterteilt. Die Strömungsrichtung des zu filtrierenden Mediums ist in der Fig. 1 durch einen Pfeil dargestellt. Das Gehäuseteil 4 kann zur Stützung des Filters 6 konzentrisch verlaufende Stützrippen aufweisen, die in der Fig. 1 nicht gezeigt sind.

Der in der Fig. 1 gezeigte Einmalfilterhalter ist mit einer Ringnut 8 ausgestattet, die in sich geschlossen ist und auf der Mantelfläche 10 des Einmalfilterhalters umläuft. Diese Ringnut 8 ist hälftig in der Mantelfläche 10 des Gehäuseteils 2 und hälftig in der Mantelfläche 10 des Gehäuseteils 4 ausgenommen. Diese beiden Ausnehmungen ergeben zusammen die genannte Ringnut 8, welche einen rechteckigen Querschnitt besitzt. In diese Ringnut 8 ist ein vorgefertigter, gefärbter Kunstoffring bzw. Kunststoffclip 9 mit ebenfalls rechteckigem Querschnitt eingesetzt. Bei der in der Fig. 1 gezeigten Ausführungsform ragt der Kunststoffring 9 radial über die Mantelfläche 10 der Gehäuseteile 2 und 4 nach außen hinaus. Dieser Kunststoffring 9 kann jedoch auch so dimensioniert sein, daß er die Ringnut 8 gerade eben ausfüllt und somit bündig mit der Mantelfläche 10 ist.

Zur Herstellung des in der Fig. 1 gezeigten Einmalfilterhalters wird der Kunststoffring 9 auf das Gehäuseteil 2 aufgeschoben, so daß er in der auf der Mantelfläche 10 des Gehäuseteils 2 ausgenommenen Hälfte der Ringnut 8 zu liegen kommt. Im Anschluß daran wird das Gehäuseteil 4 mit seinem scheibenförmigen Bereich 16 auf den scheibenförmigen Bereich 15 des Gehäusteils 2 aufgesetzt, so daß der scheibenförmige Bereich 15 "innerhalb" des Kunststoffringes 9 zu liegen kommt und so daß die Feder 18 in die Nut 19 eingreift. Anschließend werden die beiden Gehäuseteile 2,4 miteinander durch Ultraschallschweißen gas- und flüssigkeitsdicht verbunden.

Der in der Fig. 2 gezeigte Einmalfilterhalters unterscheidet sich von der in der Fig. 1 gezeigten Ausführungsform hauptsächlich dadurch, daß er mit zwei als Markierung dienenden Kunststoffringen 9 ausgestattet ist, die jeweils im radial äußeren Bereich der axial auswärts gerichteten Stirnflächen 11,12 der Gehäuseteile 2,4 angeordnet sind. Natürlich ist es auch möglich, nur einen derartigen Kunststoffring bzw. eine derartige Ringnut vorzusehen.

Bei den Kunststoffringen 9 handelt es sich um farbige Elastomerringe, die in die Ringnuten 8 eingesetzt sind. Die Kunststoffringe 9 besitzen dabei eine solche Dimension, daß sie in die Ringnuten 8 unter Einclipsen eingesetzt werden können und dauerhaft dort gehalten werden.

## Patentansprüche

1. Farblich kodierter Einmalfilterhalter aus Kunststoff mit einem ersten scheibenartig geformten und mit einem Zulaufstutzen versehenen Gehäuseteil und mit einem zweiten, ebenfalls scheibenartig und mit einem Ablaufstutzen versehenen Gehäuseteil, wobei die beiden Gehäuseteile in ihrem radial äußeren, zueiander weisenden Bereich unter Zwischenlage eines scheibenförmigen Filters druckbelastbar dicht sowie fest miteinander verbunden sind, und mit einer Farbmarkierung aus farbigem Kunststoff, die in einer im radial äußeren Bereich des Einmalfilterhalters umlaufenden Ringnut verläuft,
dadurch **gekennzeichnet,**
daß die Farbmarkierung ein vorgefertigter Kunststoffring bzw. Kunststoffclip (9) ist.

2. Farblich kodierter Einmalfilterhalter nach Anspruch 1,
dadurch **gekennzeichnet,**
daß der Kunststoffring ein Bandring (9) ist und die Ringnut (8) in der äußeren Mantelfläche (10) des ersten Gehäuseteils (2) und/oder des zweiten Gehäuseteils (4) verläuft.

3. Farblich kodierter Einmalfilterhalter nach Anspruch 1,
dadurch **gekennzeichnet,**
daß der Kunststoffring ein Flachring (9) ist und die Ringnut (8) im radial äußeren Bereich (7) der axial auswärts gerichteten Stirnfläche (11,12) mindestens eines der beiden Gehäuseteile (2,4) verläuft.

4. Farblich kodierter Einmalfilterhalter nach mindestens einem der Ansprüche 1 bis 3,
dadurch **gekennzeichnet,**
daß die Ringnut (8) und der Kunststoffring (9) derart dimensioniert sind, daß der Kunststoffring (9) paßgenau und dauerhaft in die Ringnut (8) einclipsbar ist.

5. Farblich kodierter Einmalfilterhalter nach mindestens einem der Ansprüche 1 bis 4,
dadurch **gekennzeichnet,**
daß die Ringnut (8) und der Kunststoffring (9) einen flächenkongruenten Querschnitt und insbesondere einen Rechteckquerschnitt besitzen.

6. Farblich kodierter Einmalfilterhalter nach mindestens einem der Ansprüche 1 bis 5,
dadurch **gekennzeichnet,**
daß der Kunststoffring (9) aus im wesentlichen undurchsichtigem Kunststoff und die Gehäuseteile (2,4) aus im wesentlichem durchsichtigem Kunststoff gefertigt sind.

## Claims

1. Colour coded one-way filter holder of plastics material having a first washer-like shaped housing part provided with an inlet spigot and a second, likewise washer-like housing part provided with an outlet spigot, whereby both of the housing parts with a washer-like filter disposed therebetween are interconnected with one another at their radially outer oppositely facing region rigidly and pressure tightly, and further having a colour marking of coloured plastics material disposed in a circular groove, which extends in a radially outer region of the one-way filter holder,
**characterized** in that,
the colour marking is a prefabricated plastics ring or plastics clip (9).

2. Colour coded one-way filter holder according to claim 1,
**characterized** in that,
the plastics ring is a tape ring (9) and the circular groove (8) extends in the outer surface (10) of the first housing part (2) and/or the second housing part (4).

3. Colour coded one-way filter holder according to claim 1,
**characterized** in that,
the plastics ring is a flat ring (9) and the circular groove (8) extends in the radially outer region (7) of the axially outwardly directed end surface (11,12) of at least one of the two housing parts (2,4).

4. Colour coded one-way filter holder according to at least one of the claims 1 to 3,
**characterized** in that,
the circular groove (8) and the plastics ring (9) are dimensioned such that the plastics ring (9) can be clipped in the circular groove (8) permanently and without play.

5. Colour coded one-way filter holder according to at least one of the claims 1 to 4,
**characterized** in that,
the circular groove (8) and the plastics ring (9) have a surficially congruent cross-section and in particular a rectangular cross-section.

6. Colour coded one-way filter holder according to at least one of the claims 1 to 5,
**characterized** in that,
the plastics ring (9) and the housing parts (2,4) are made of a substantially opaque plastics material and a substantially transparent plastics material, respectively.

## Revendications

1. Filtre à jeter en matière synthétique, codé par colorisation et muni d'une première pièce de boîtier moulée comme un disque et pourvue d'une tubulure d'alimentation ainsi que d'une seconde pièce de boîtier également moulée comme un disque et munie d'une tubulure d'évacuation, les deux pièces de boîtier étant reliées entre elles, dans leurs zones radialement extérieures, tournées l'une vers l'autre, de façon fixe et étanche pour pouvoir supporter la pression et avec intercalation d'un filtre en forme de disque, et muni d'une marque de colorisation en matière synthétique de couleur qui se trouve dans une rainure pour anneau de retenue faisant le tour de la zone radialement extérieure du filtre à jeter, caractérisé en ce que la marque de colorisation est un anneau en matière plastique préfabriqué ou un clip en matière plastique (9).

2. Filtre à jeter codé par colorisation selon la revendication 1, caractérisé en ce que l'anneau en matière plastique est un tore enroulé (9) et en ce que la rainure pour anneau de retenue (8) se trouve dans la surface extérieure de l'enveloppe (10) de la première pièce de boîtier (2) et/ou de la seconde pièce de boîtier (4).

3. Filtre à jeter codé par colorisation selon la revendication 1, caractérisé en ce que l'anneau en matière synthétique est un anneau plat (9) et en ce que la rainure pour anneau de retenue (8) se trouve dans la zone radialement extérieure (7) de la face dirigée de façon axiale vers l'extérieur (11, 12) d'au moins une des deux pièces de boîtier (2, 4).

4. Filtre à jeter codé par colorisation selon au moins l'une des revendications 1 à 3, caractérisé en ce que la rainure pour anneau de retenue (8) et l'anneau en matière plastique (9) sont dimensionnés de telle sorte que l'anneau en matière plastique (9) peut être enclipsé dans la rainure pour anneau de retenue (8) de façon durable et en étant exactement ajusté.

5. Filtre à jeter codé par colorisation selon au moins l'une des revendications 1 à 4, caractérisé en ce que la rainure pour anneau de retenue (8) et l'anneau en matière plastique (9) possèdent une section transversale à surfaces congruentes et en particulier une section transversale rectangulaire.

6. Filtre à jeter codé par colorisation selon au moins l'une des revendications 1 à 5, caractérisé en ce que l'anneau en matière plastique (9) est fabriqué en matière plastique essentiellement non transparente et les pièces de boîtier (2, 4) en matière plastique essentiellement transparente.
